# EUROPÄISCHE PATENTSCHRIFT

(11) **EP 0 348 938 B1**
(45) Veröffentlichungstag und Bekanntmachung des Hinweises auf die Patenterteilung: **09.06.1993**
(21) Anmeldenummer: 89111769.9
(22) Anmeldetag: 28.06.1989
(51) Int. Cl.: H02P 9/46

(54) **Ein Netz und Verbraucher versorgende Stromerzeugungsanlage**
Current producing plant supplying mains and consumer
Installation productrice de courant alimentant le réseau et un consommateur

(30) Priorität: 01.07.1988 DE 3822326; 04.10.1988 DE 3833719
(43) Veröffentlichungstag der Anmeldung: 03.01.1990
(73) Patentinhaber: LOHER AKTIENGESELLSCHAFT, D-94095 Ruhstorf (DE)
(72) Erfinder: Schörner, Jochen, Dr. Ing., D-8399 Ruhstorf a.d. Rott (DE); Fladerer, Thomas, Ing., A-4783 Wernstein/Inn (AT); Wimmer, Johann, Dipl.-Ing., D-8399 Griesbach (DE)
(74) Vertreter: Zinnecker, Armin, Dipl.-Ing.

(56) Entgegenhaltungen:
- DE-A- 1 488 978
- DE-A- 3 438 893
- DE-B- 2 643 169
- PATENT ABSTRACTS OF JAPAN, Band 6, Nr. 67 (E-104)(945), 28. April 1982; & FP-A-57 009294
- PATENT ABSTRACTS OF JAPAN, Band 6, Nr. 67 (E-104)(945), 28. April 1982; & JP-A-57 00 9298
- PATENT ABSTRACTS OF JAPAN, Band 3, Nr. 135 (E-50) (91), 10. November 1979; & JP-A-54 113056

## Beschreibung

Die Erfindung betrifft eine ein Netz und Verbraucher versorgende Stromerzeugungsanlage, die mit einer zeitabhängig schwankenden Antriebsdrehzahl angetrieben ist.

Eine derartige Stromerzeugungsanlage ist aus der DE-OS 34 38 893 bekannt. Sie weist einen Asynchrongenerator, eine an die Verbraucher angeschlossene Kapazität und einen Stromzwischenkreisumrichter mit einem Gleichrichter, einer Zwischenkreisdrossel und einem Wechselrichter auf. Die vorbekannte Stromerzeugungsanlage eignet sich für die Verwendung bei Netzbetrieb, wobei auch eine Leistungsregelung vorgesehen ist. Bei Inselbetrieb ist eine derartige Stromerzeugungsanlage dann verwendbar, wenn eine konstante Drehzahl in den Generator eingeleitet wird. Wenn eine wechselnde Drehzahl eingeleitet wird, ergeben sich jedoch Schwierigkeiten bezüglich der Spannungshaltung. Eine wechselnde Drehzahl wird insbesondere bei einem Antrieb des Generators durch Windenergie erzeugt.

In einem Netz sind im allgemeinen Blindleistungsverbraucher, beispielsweise Asynchronmotoren, vorhanden. Für diese Blindleistungsverbraucher muß also die erforderliche Blindleistung zur Verfügung gestellt werden. Im öffentlichen Netz, also beim Netzbetrieb, wird diese Blindleistung vom Energieversorgungsunternehmen oder stufig geschalteten Kompensationsanlagen geliefert. Bei einem Inselnetz ist es erforderlich, daß ein blindleistungsabgebendes Element vorhanden ist, welches die Blindleistung für die Blindleistungsverbraucher zur Verfügung stellt.

Wenn bei Inselbetrieb ein Synchrongenerator verwendet wird, kann die von den Verbrauchern geforderte Blindleistung auf einfache Weise durch eine entsprechend gesteuerte bzw. geregelte Erregung des Synchrongenerators erzeugt und zur Verfügung gestellt werden. Bei Kraftanlagen, die mit wechselnden Drehzahlen arbeiten, insbesondere bei Windkraftanlagen, ist es jedoch vorzuziehen, statt eines Synchrongenerators einen Asynchrongenerator zu verwenden, da letzterer eine drehzahl-weiche Kennlinie hat, so daß auf Drehzahlschwankungen besser reagiert werden kann. Der Windrotor hat zwar normalerweise Flügel mit einem verstellbaren Anstellwinkel, so daß die Drehzahlschwankungen auch durch eine Veränderung des Anstellwinkels angeändert werden können. Diese Regelung ist jedoch verhältnismäßig träge, so daß es erwünscht ist, darüber hinaus noch beim Generator Einflußmöglichkeiten zu haben. Durch die drehzahl-weiche Kennlinie des Asynchrongenerators werden Drehzahländerungen des Windrades nicht unmittelbar in Frequenzänderungen des Generators abgebildet, so daß Zeit zur Nachführung des Anstellwinkels der Flügel des Windrotors zur Verfügung steht. Es ist also anzustreben, bei einem System mit wechselnden Drehzahlen, insbesondere bei einer Windkraftanlage, einen Asynchrongenerator zu verwenden.

Der wesentliche Nachteil des Asynchrongenerators liegt jedoch darin, daß dieser ein Blindleistungsverbraucher ist. Bei Netzbetrieb kommt dieser Nachteil noch nicht entscheidend zum tragen, da die erforderliche Blindleistung vom Energieversorgungsunternehmen bzw. stufig geschalteten Kompensationsanlagen geliefert wird. Bei Inselbetrieb muß jedoch die Blindleistung für den Asynchrongenerator und für die Verbraucher auf andere Weise zur Verfügung gestellt werden. Dies kann beispielsweise durch einen Kondensator geschehen. Dieser Kondensator muß aber ständig an den Blindleistungsbedarf des Gesamtsystems angepaßt werden, da je nach Zuschaltung der Verbraucher ein unterschiedlicher Blindleistungsbedarf besteht. Auch der Blindleistungsbedarf des Asynchrongenerators selbst ist zeitlich variabel, da er von dessen Arbeitspunkt, also von Drehzahl und Drehmoment abhängt.

Um eine variable Kondensatorkapazität zu schaffen, bestünde eine erste bekannte Lösungsmöglichkeit darin, eine Mehrzahl gleicher oder verschiedener Kondensatoren vorzusehen, die einzeln zuschaltbar sind. Eine andere bekannte Lösungsmöglichkeit bestünde darin, eine verstellbare Kapazität dadurch zu erzeugen, daß ein Kondensator mit einer verhältnismäßig großen Kapazität gewählt wird undn daß parallel zu diesem eine Induktivität von verstellbarer Größe geschaltet wird. Durch die Verstellung der Induktivität kann im Ergebnis eine verstellbare Kapazität erzeugt werden. Der Nachteil von beiden Lösungen liegt darin, daß der schaltungstechnische Aufwand groß ist und daß die Bauteile teuer sind, so daß die gesamte Realisierung verhältnismäßig teuer wird.

Aus der DE-AS 26 43 169 ist es zur Blindleistungskompensation eines Verbrauchers bekannt, einen Stromzwischenkreisumrichter mit einem Gleichrichter, einer Zwischenkreisdrossel und einem Wechselrichter einzusetzen.

Aus der Literaturstelle "Vaupel G.: Netzgeführter Stromrichter als Blindstromkompensator mit endlich großer Glättungsdrosselspule; in: etzArchiv", Bd. 7 (1985) H. 9, S. 303 - 305) ist eine Kapazität und ein netzgeführter Stromrichter mit Drossel als Blindstromkompensator als solcher bekannt.

Aus der Literaturstelle "Self-excited induction machine as a small low-cost generator" in: IEE proceedings, vol. 131, Pt. C, No. 2, March 1984, S. 33 - 41, ist es zum Betrieb einer selbsterregten Asynchronmaschine bekannt, eine veränderliche Kapazität aus mehreren Kondensatoren, die wahlweise zuschaltbar sind, zu bilden, aber auch darüberhinaus eine Kapazität und einen netzgeführten Stromrichter mit Drossel als Blindleistungssteller einzusetzen.

Das Buch "Thyristoren", Teubner, Stuttgart, 2. Aufl., 1970, S. 71 - 82, S. 257 offenbart die grundsätzlichen Eigenschaften und Anwendungsmöglichkeiten von Thyristoren und deren Anwendungsmöglichkeiten u.a. zur Drehzahländerung bei Asynchronmaschinen.

Aufgabe der Erfindung ist es, eine Stromerzeugungsanlage der eingangs angegebenen Art zu schaffen, die auf einfache und kostengünstige Weise bei möglichst guter Spannungskonstanz im Inselbetrieb betreibbar ist.

Erfindungsgemäß wird diese Aufgabe durch die Merkmale des Anspruchs 1 gelöst. Im Netzbetrieb wird der Asynchrongenerator durch einen aus einem Gleichrichter, einer Zwischenkreisdrossel und einem Wechselrichter bestehenden Stromzwischenkreisumrichter mit dem Netz verbunden. Der Wechselrichter wird nicht kurzgeschlossen. Die Stromerzeugungsanlage arbeitet dann auf vorbekannter Weise. Die für den Asynchrongenerator und die Verbraucher erforderliche Blindleistung wird vom Energieversorgungsunternehmen oder einer stufig geschalteten Kompensationsanlage geliefert. Der Ausgleich der Drehzahlschwankungen erfolgt durch den Stromzwischenkreis-Umrichter. Im Inselbetrieb wird der Asynchrongenerator direkt an die Verbraucher angeschlossen und der Wechselrichter kurzgeschlossen, so daß ein Blindleistungssteller aus den Komponenten Gleichrichter und Zwischenkreisdrossel gebildet wird. Der Stromzwischenkreisumrichter arbeitet dann als veränderliche Induktivität. Die für den Asynchrongenerator und die Verbraucher erforderliche Blindleistung wird durch die im System vorhandene Kapazität bereitgestellt. Die Anpassung an den wechselnden Blindleistungsbedarf erfolgt durch den kurzgeschlossenen Stromzwischenkreisumrichter, dessen Zwischenkreisdrossel im Zusammenwirken mit der Kapazität eine veränderliche Kapazität je nach Blindleistungsbedarf zur Verfügung stellt.

Die an die Verbraucher angeschlossene Kapazität ist vorzugsweise eine veränderbare Kapazität.

Die erfindungsgemäße Stromerzeugungsanlage ist insbesondere für den Antrieb mit Windenergie geeignet.

Der Regelung des Stromzwischenkreisumrichters wird insbesondere eine Drehmoment- bzw. Leistungsregelung überlagert zur Erzeugung einer Drehmoment-Drehzahl-Kennlinie mit dem Charakter einer Moment-Einprägung unabhängig von Änderungen der Drehzahl.

Das neue stromrichtergeregelte Asynchrongenerator-System ist also bei zeitabhängig schwankender Antriebsdrehzahl sowohl im Inselbetrieb als auch im Netzbetrieb betreibbar. Das System ist kostengünstig, da der an sich vorbekannte Stromzwischenkreis-Umrichter in Falle des Netzbetriebes wie bisher betrieben wird und für Inselbetrieb ebenfalls verwendbar ist, und zwar dadurch, daß er kurzgeschlossen wird. Durch diese einfache Maßnahme wird das vorbekannte System inselfähig gemacht.

Die Kapazität wird derart ausgelegt, daß sie der größten benötigten Kapazität entspricht. Im Inselbetrieb kann dann diese Kapazität durch entsprechende Zuschaltung der Induktivität der Zwischenkreisdrossel den Anforderungen entsprechend verringert werden. Die bei Inselbetrieb erforderliche, regelbare Blindleistung wird einerseits durch die Kapazität und andererseits durch die Induktivität der Zwischenkreisdrossel erzeugt. Dadurch, daß die Induktivität der Zwischenkreisdrossel veränderlich ist, ist auch die Kapazität im Endergebnis veränderbar. Die zur Veränderung der Kapazität erforderliche Veränderungsmöglichkeit der Kapazität wird auf besonders einfache Weise dadurch erzeugt, daß der Wechselrichter kurzschließbar ist.

Nicht ohne Aufwand ist es möglich gewesen, ein Inselnetz mit einem Asynchrongenerator zu betreiben, wenn die Drehzahl und/oder die Belastung des Generators zeitabhängig schwankt, wie dies beispielsweise bei einem Antrieb des Generators durch Windenergie der Fall ist. Der Grund hierfür liegt darin, daß eine verstellbare Kapazität zu teuer ist, wenn sie durch eigens dafür vorgesehene Bauteile verwirklicht wird. Hier setzt die Erfindung ein: Ein an sich bekanntes Bauteil, nämlich der Stromzwischenkreis-Umrichter, zur Erzeugung einer im Endergebnis veränderlichen Kapazität (konstante Kapazität und parallel geschaltete, veränderliche Induktivität) wird dazu verwendet, die im Endergebnis veränderliche Kapazität herzustellen. Der vorbekannte Umrichter wird bei Synchrongeneratoren und auch bei Asynchrongeneratoren bereits bisher dazu verwendet, die von der Windenergie herrührende, veränderliche Drehzahl des Generators an die konstante, vorgegebene Netzfrequenz anzupassen, so daß ein einem weiten Windbereich Energierückspeisung möglich wird. Der vorbekannte Umrichter schafft also die Möglichkeit, einen Generator durch Windenergie anzutreiben und die gelieferte Energie in das Netz einzuspeisen.

Die Erfindung beruht darauf, das an sich bekannte Bauteil des Umrichters geringfügig zu ändern, nämlich dadurch, daß der Wechselrichter kurzschließbar gemacht wird. Man erhält dadurch die veränderliche Induktivität, die man im Inselbetrieb braucht, um im Zusammenwirken mit der konstanten Kapazität eine im Endergebnis veränderliche Kapazität zu erzeugen. Die Veränderung des an sich bekannte Umrichters besteht darin, den Wechselrichter bzw. einen der drei Zweige des Wechselrichters kurzzuschließen. Wenn der Wechselrichter aus Thyristoren besteht, kann einer der drei Zweige dieses Wechselrichters durchgezündet werden. Hierdurch entsteht dann der erforderliche Kurzschluß (Parallelkurzschluß) zwischen dem Gleichrichter und der Zwischenkreisdrossel des Umrichters.

Im Netzbetrieb ist bei hochwertigen Anlagen ein Umrichter vorhanden. Gemäß der Erfindung wird das System dadurch inselfähig gemacht, daß dieser ohnehin vorhandene Umrichter im Inselbetrieb als veränderliche Induktivität verwendet wird, um zusammen mit dem Kondensator die erforderliche (veränderliche) Blindleistung erzeugen zu können. Hierdurch kann auch beim Inselbetrieb die Synchronlösung durch die drehzahlweiche Asynchronlösung ersetzt werden. Durch die Erfindung ist es also möglich, bei einem an sich für Netzbetrieb geschalteten System mit geringem Aufwand die Inselfähigkeit herzustellen.

Der Erfindung liegt der Gedanke zugrunde, eine Asynchronmaschine, vorzugsweise eine Asynchron-Kurzschlußläufer-Maschine in Verbindung mit einem Stromzwischenkreis-Umrichter zu verwenden, wobei bei Netzbetrieb der Zwischenkreis-Umrichter die Rolle der Drehmoment-Regelung übernimmt und bei Inselbetrieb Teile des Zwischenkreis-Umrichters zur Blindleistungs-Regelung benutzt werden. Die Kondensator-Baugruppe, also die Kapazität, kompensiert bei Netzbetrieb die Blindleistung des Umrichter-Systems. Bei Inselbetrieb kompensiert die Kondensator-Baugruppe, also die Kapazität, die Blindleistung von Asynchrongenerator und Verbrauchern. Je nach Auslegung unter Umständen vorhandene Unterschiede zwischen Netz-Nennspannung und Generator-Nennspannung können beispielswiese durch Wicklungsumschaltung der Asynchronmaschine ausgeglichen werden.

Der Vorteil des erfindungsgemäßen Systems gegenüber Systemen mit Synchrongeneratoren besteht neben dem robusteren Aubau der Asynchron-Kurzschlußläufer-Maschine in der natürlichen Drehmoment-Drehzahl-Kennlinie der Maschine, die durch konstruktive Maßnahmen beeinflußt werden kann. Dies kommt im Inselbetrieb dem gewünschten drehzahl-weichen Verhalten entgegen, im Gegensatz zur Synchronmaschine mit "eingeprägter Drehzahl".

Das erfindungsgemäße System genügt als inselfähiges Generatorsystem für zeitabhängig schwankende Antriebsdrehzahlen, insbesondere für Wind-Energie-Konverter, demnach folgenden Forderungen:
(1) Zum Ausgleich von Windböen kann eine möglichst drehzahlweiche Drehmoment-Drehzahl-Kennlinie erzielt werden (eingeprägtes Moment);
(2) Das System kann bei verschiedenen Drehzahlen arbeiten;
(3) Es ist ein Betrieb als Inselnetz möglich; dies unter Umständen mit verringerten Anforderungen.

Vorteilhafte Weiterbildungen sind in den Unteransprüchen beschrieben.

Vorzugsweise weist der Wechselrichter Thyristoren auf und sind die Thyristoren eines Zweiges des Wechselrichters durchzündbar Hierdurch kann auf besonders einfache Weise der bei Inselbetrieb erforderliche Kurzschluß des Wechselrichters erzeugt werden.

Die Kapazität des Systems kann aus mehreren Kondensatoren bestehen, die wahlweise zuschaltbar sind. Hierdurch kann die Kapazität wechselnden Anforderungen angepaßt werden. Es ist also eine relativ grobe Vorauswahl unter verschiedenen Kapazitäten möglich.

Die Kapazitäten können verdrosselt sein. Die Induktivitäten, durch die die Kapazitäten verdrosselt sind, sind jedoch in Bezug auf die Zwischenkreisdrossel des Stromzwischenkreis-Umrichters relativ klein.

Die Wicklungen des Asynchrongenerators können umschaltbar sein.

Hierdurch können eventuelle Unterschiede zwischen Netz-Nennspannung und Generator-Nennspannung durch Wicklungsumschaltung der Asynchronmaschine auf einfache Weise ausgeglichen werden.

Vorzugsweise ist ein Blindleistungsregler für die Kapazität oder die Kapazitäten vorgesehen. Die Kapazitäten können aus einer Kondensator-Baugruppe bestehen. Es ist möglich, daß diese Kondensator-Baugruppe durch den Blindleistungsregler stufig geschaltet ist.

Im Inselbetrieb kann der Blindleistungs-Steller aus den Komponenten Gleichrichter, Zwischenkreisdrossel und einem kurzgeschlossenen bzw. durchgezündeten Zweig des Wechselrichters bestehen. Vorzugsweise wird der Blindleistungssteller durch eine Spannungsregler derart geregelt, daß sich eine weitgehend konstante Netzspannung unabhängig von der Belastung einstellt.

Ein Ausführungsbeispiel der Erfindung wird nachstehend anhand der Zeichnungen im einzelnen erläutert. In den Zeichnungen zeigt
- Fig. 1: ein Ausführungsbeispiel im Netzbetrieb und
- Fig. 2: das in Fig. 1 gezeigte Ausführungsbeispiel im Inselbetrieb.

Die Anordnung besteht aus einem Asynchrongenerator 3, an den sich ein Stromzwischenkreis-Umrichter 1 anschließt. Der Stromzwischenkreis-Umrichter 1 besteht aus den Komponenten Gleichrichter 1a, Zwischenkreisdrossel 1b und Wechselrichter 1c. Weiterhin ist eine Kondensator-Baugruppe 4 vorgesehen. Die Kondensatoren dieser Kondensator-Baugruppe sind verdrosselt. Die verdrosselte Kondensator-Baugruppe übernimmt die Kompensation der Blindleistung. Die Induktivitäten der Kondensator-Baugruppe sind verhältnismäßig klein; sie fallen gegenüber der Induktivität der Zwischenkreisdrossel 1b kaum ins Gewicht.

Das System speist das Verbundnetz 5 beziehungsweise die Verbraucher 6.

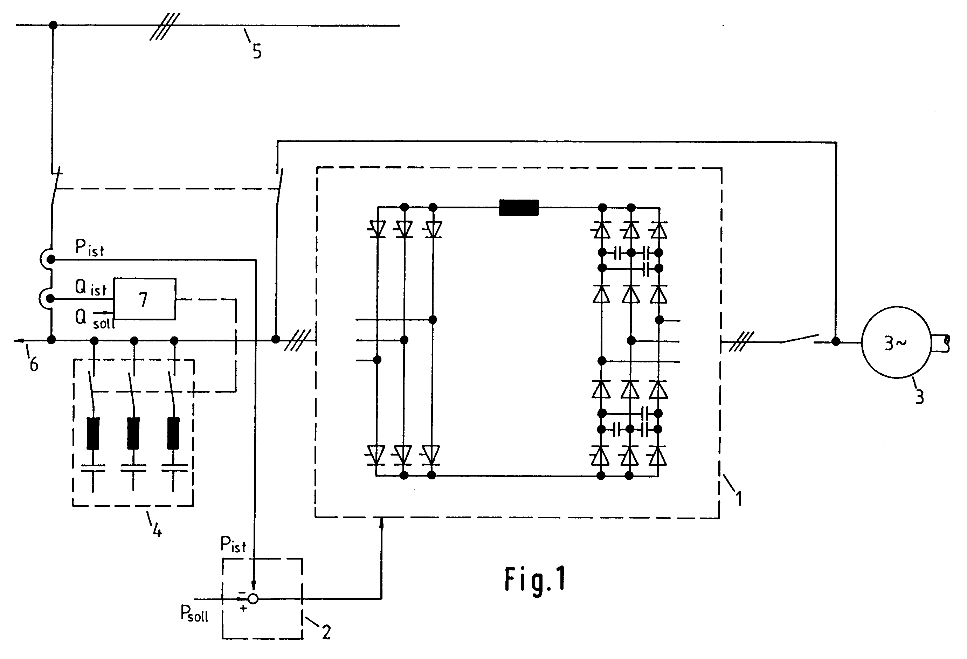

Bei dem in Fig. 1 gezeigten Netzbetrieb erfolgt der Wirkleistungsfluß von der Asynchronmaschine 3 über den Stromzwischenkreis-Umrichter 1 ins Verbundnetz 5. Der konventionellen Regelung des Umrichters 1 ist die Drehmoment- bzw. Leistungsregelung 2 überlagert, die für eine Drehmoment-Drehzahl-Kennlinie mit dem Charakter einer Moment-Einprägung unabhängig von Änderungen der Drehzahl sorgt. Die verdrosselte Kondensator-Baugruppe 4 wird dabei in gebräuchlicher Weise - durch den Blindleistungsregler 7 stufig geschaltet - zur Kompensation der Umrichter-Blindleistung benutzt.

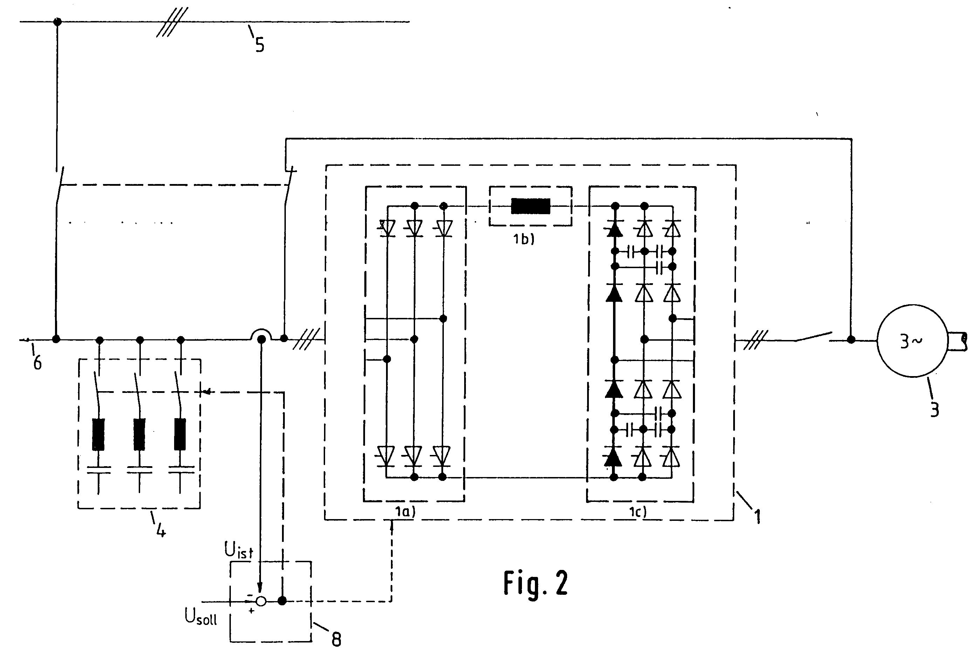

Bei dem in Fig. 2 dargestellten Inselbetrieb ist der Asynchrongenerator 3 direkt mit den Verbrauchern 6 verbunden. Die Kondensator-Baugruppe 4 deckt den Blindleistungsbedarf des Asynchrongenerators 3 und der Verbraucher 6. Eine im Endergebnis veränderliche Kapazität zur Blindleistungs-Kompensation wird dadurch erzeugt, daß parallel zur Kapazität der Kondensator-Baugruppe 4 der modifizierte "Umrichter" geschaltet wird. Es wird also ein Blindleistungs-Steller verwendet, der aus den Komponenten Gleichrichter 1a, Zwischenkreisdrossel 1b und einem durchgeschalteten bzw. durchgezündeten Zweig des Wechselrichters 1c besteht. Dieser Blindleistungs-Steller wird durch den Spannungsregler 8 derart geregelt, daß sich eine weitgehend konstante Netzspannung unabhängig von der Belastung einstellt.

Die Aufgabe der relativ langsamen Drehzahlregelung auf einen optimalen Wert wird einem übergeordneten Regelkreis für das mechanische System überlassen. Dieser ist in den Figuren 1 und 2 nicht dargestellt.

Das erfindungsgemäße System, bestehend aus einem mit einem besonderen Regelverfahren ausgeführten Umrichter mit Stromzwischenkreis, einer Asynchronmaschine sowie Zusatzeinrichtungen wird so verwendet, daß sowohl bei Betrieb am Verbundnetz als auch bei Inselbetrieb ein einem Wind-Energie-Konverter angepaßtes Verhalten erzielt wird.

## Patentansprüche

1. Ein Netz und Verbraucher versorgende Stromerzeugungsanlage, die mit einer zeitabhängig schwankenden Antriebsdrehzahl angetrieben ist, mit
einem Asynchrongenerator (3),
einer an die Verbraucher (6) angeschlossenen Kapazität (4),
wobei im Netzbetrieb der Asynchrongenerator (3) durch einen aus einem Gleichrichter, einer Zwischenkreisdrossel (1b) und einem Wechselrichter bestehenden Stromzwischenkreisumrichter (1) mit dem Netz verbunden wird
und wobei im Inselbetrieb der Asynchrongenerator direkt an die Verbraucher angeschlossen wird und der Wechselrichter (1c) kurzgeschlossen wird, so daß ein Blindleistungssteller aus den Komponenten Gleichrichter (1a) und Zwischenkreisdrossel (1b) gebildet wird.

2. Stromerzeugungsanlage nach Anspruch 1, dadurch gekennzeichnet, daß der Regelung des Stromzwischenkreisumrichters (1) eine Drehmoment- bzw. Leistungsregelung überlagert ist zur Erzeugung einer Drehmoment-Drehzahl-Kennlinie mit dem Charakter einer Moment-Einprägung unabhängig von Änderungen der Drehzahl.

## Claims

1. A current-producing plant which supplies the mains and loads and is driven at a drive speed which fluctuates as a function of time, having an asynchronous generator (3), a capacitor (4) which is connected to the loads (6), the asynchronous generator (3) being connected, in the mains mode, to the mains by means of an intermediate circuit current inverter (1) which consists of a rectifier, an intermediate circuit inductor (1b) and an inverted rectifier, and the asynchronous generator being directly connected, in inland mode, to the loads and the inverted rectifier (1c) being short-circuited so that a reactive-power controller is formed from the rectifier (1a) and intermediate circuit inductor (1b) components.

2. Current-producing plant according to Claim 1, characterised in that a torque or power control is superimposed on the control of the intermediate circuit current inverter (1) in order to produce a torque/speed characteristic curve with the character of an impressed torque injection independently of changes in the speed.

## Revendications

1. Installation productrice de courant alimentant le réseau et un consommateur, qui est entraînée par un régime moteur fluctuant asservi au temps, comportant
un générateur asynchrone (3),
une capacité (4) raccordée aux consommateurs (6),
le générateur asynchrone (3), lorsqu'il fonctionne sur secteur, étant raccordé avec un changeur de fréquence du circuit de courant intermédiaire (1) consistant en un redresseur, une bobine de choc du circuit intermédiaire (1b) et un onduleur,
ledit générateur asynchrone étant raccordé dans l'exploitation insulaire directement aux consommateurs, et l'onduleur (1 c) étant court-circuité de sorte qu'un régulateur de puissance réactive est formé entre les composants redresseur (1a) et bobine de choc du circuit intermédiaire (1b).

2. Installation productrice de courant selon la revendication 1, caractérisée en ce que le réglage du changeur de fréquence du circuit de courant intermédiaire (1) est coiffé par une régulation du couple ou de la puissance pour produire une ligne caractéristique de couple/régime ayant le caractère d'un couple imprimé indépendant de modifications du régime.
